# EUROPEAN PATENT SPECIFICATION

(11) **EP 3 674 972 B1**
(45) Date of publication and mention of the grant of the patent: **08.09.2021**
(21) Application number: 19209570.1
(22) Date of filing: 15.11.2019
(51) Int. Cl.: G06K 9/00, G06K 9/62

(54) **METHODS AND SYSTEMS FOR GENERATING TRAINING DATA FOR NEURAL NETWORK**
VERFAHREN UND SYSTEME ZUR ERZEUGUNG VON TRAININGSDATEN FÜR EIN NEURONALES NETZWERK
PROCÉDÉS ET SYSTÈMES POUR GÉNÉRER DES DONNÉES D'ENTRAINEMENT POUR UN RÉSEAU NEURONAL

(30) Priority: 26.12.2018 RU 2018146459
(43) Date of publication of application: 01.07.2020
(73) Proprietor: Yandex Self Driving Group LLC, 121205 Skolkovo, Moscow (RU)
(72) Inventor: ORLOV, Vsevolod Nikolaevich, 140181 Zhukovsky (RU)
(74) Representative: Sach, Greg Robert

(56) References cited:
- ALJO\V{S}A O\V{S}EP ET AL: "Large-Scale Object Discovery and Detector Adaptation from Unlabeled Video", ARXIV.ORG, CORNELL UNIVERSITY LIBRARY, 201 OLIN LIBRARY CORNELL UNIVERSITY ITHACA, NY 14853, 23 December 2017 (2017-12-23), XP080848275,
- LAMPERT CHRISTOPH H ET AL: "Active Structured Learning for High-Speed Object Detection", 9 September 2009 (2009-09-09), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 221 - 231, XP047380382, ISBN: 978-3-642-17318-9 * Section 3 *
- SAYANAN SIVARAMAN ET AL: "A General Active-Learning Framework for On-Road Vehicle Recognition and Tracking", IEEE TRANSACTIONS ON INTELLIGENT TRANSPORTATION SYSTEMS, IEEE, PISCATAWAY, NJ, USA, vol. 11, no. 2, 1 June 2010 (2010-06-01), pages 267-276, XP011347242, ISSN: 1524-9050, DOI: 10.1109/TITS.2010.2040177
- ZOLFAGHARI BENGAR JAVAD ET AL: "Temporal Coherence for Active Learning in Videos", 2019 IEEE/CVF INTERNATIONAL CONFERENCE ON COMPUTER VISION WORKSHOP (ICCVW), IEEE, 27 October 2019 (2019-10-27), pages 914-923, XP033732867, DOI: 10.1109/ICCVW.2019.00120 [retrieved on 2020-03-02]
- KAO CHIEH-CHI ET AL: "Localization-Aware Active Learning for Object Detection", 16 January 2018 (2018-01-16), ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 506 - 522, XP047508320, ISBN: 978-3-319-10403-4 [retrieved on 2019-05-26] * Section 3.3; figure 4 *
- WANG BEN-LI ET AL: "A Semi-Automatic Video Labeling Tool for Autonomous Driving Based on Multi-Object Detector and Tracker", 2018 SIXTH INTERNATIONAL SYMPOSIUM ON COMPUTING AND NETWORKING (CANDAR), IEEE, 23 November 2018 (2018-11-23), pages 201-206, XP033485460, DOI: 10.1109/CANDAR.2018.00035 [retrieved on 2018-12-27]

## Description

### FIELD OF TECHNOLOGY

The present technology relates to computer-implemented methods and systems for machine learning, and more specifically, to methods and systems for generating training data for a Neural Network.

### BACKGROUND

Several computer-based navigation systems that are configured for aiding navigation and/or control of vehicle have been proposed and implemented in the prior art. These systems range from more basic map-aided localization-based solutions - i.e. use of a computer system to assist a driver in navigating a route from a starting point to a destination point; to more complex ones - computer-assisted and/or driver-autonomous driving systems.

Some of these systems are implemented as what is commonly known as a "cruise control" system. Within these systems, the computer system boarded on the vehicles maintains a user-set speed of the vehicle. Some of the cruise control system implement an "intelligent distance control" system, whereby the user can set up a distance to a potential car in front (such as, select a value expressed in a number of vehicles) and the computer system adjusts the speed of the vehicle at least in part based on the vehicle approaching the potential vehicle in front within the pre-defined distance. Some of the cruise control systems are further equipped with collision control systems, which systems upon detection of the vehicle (or other obstacle) in front of the moving vehicle, slow down or stop the vehicle.

Some of the more advanced systems provide for a fully autonomous driving of the vehicle without direct control from the operator (i.e. the driver). These autonomously driven vehicles include computer systems that can cause the vehicle to accelerate, brake, stop, change lane and self-park.

One of the main technical challenges in implementing the above computer systems is the ability for the computer system to detect an object located around the vehicle. In one example, the computer systems may need the ability to detect the vehicle in front of the present vehicle (the present vehicle having the computer system onboard), which vehicle in front may pose a risk / danger to the present vehicle and may require the computer system to take a corrective measure, be it braking or otherwise changing speed, stopping or changing lanes.

On a more granular level, the challenge of the object detection is not just the binary detection (presence or absence of the object), but the speed and accuracy associated with such an analysis and determination (especially avoiding "false negatives", whereby the system does not identify an object which is indeed present in front or around the vehicle).

The acuteness of this problem is illustrated by the following hypothetical scenario. Imagine that the self-driving or partially-autonomous vehicle is driving along the route. A child (or an adult, a pet, and the like) runs in front of the vehicle. It is imperative that the computer system controlling the vehicle detects the presence of the object quickly and take corrective actions to avoid the collision. Naturally, the faster the computer system detects the presence of the object, the more time the computer system will have to determine the corrective action and to command the vehicle to execute the corrective action.

It should also be noted that the computer system controlling the vehicle also needs to accurately determine the boundaries of the object. Naturally, boundaries of objects such as lanes, for example, need to be accurately determined in order to identify the relative location of the vehicle with respect to the lanes and to take corrective actions if need be. In other words, the challenge of object detection is not only classification of objects (e.g., vehicle, human, tree, etc.) but also localization of objects.

Aljosa Osep et al: "Large-scale object discovery and detector adaptation from unlabeled video", Arxiv.org, Cornell University Library, 201 Olin Library Cornell University Ithaca, NY 14853, 23 December 2017 (2017-12-23), XP080848275 describes a deep neural network object detector for images captured in vehicles.

A Semi-Automatic Video Labeling Tool for Autonomous Driving Based on Multi-Object Detector and Tracker, published in: 2018 Sixth International Symposium on Computing and Networking (CANDAR): a semi-automatic video labeling tool for autonomous driving. The tool is based on the open-source video annotation system VATIC. A multi-object detector and tracker is first used to annotate the video. Possible errors in the labeling of the objects are identified and then presented to human annotators to produce correct annotations.

### SUMMARY

Developers of the present technology have realized that prior art solutions for object detection have drawbacks. In one case, prior art technologies may inconsistently localize objects during their detection. For example, the location of an object on a given image and the location of this same object on a substantially similar image may be inconsistent.

The developers of the present technology have realized that predicting substantially different locations of a given object on substantially similar images is problematic and may be indicative of not adequate training of the machine learning algorithm used for prediction. In the case where the object detection is to be used for controlling vehicle trajectory, inconsistent localization of objects may be dangerous as the control of the vehicle may be performed based on a biased location of the object being detected. In this invention, the object is a lane.

As such, developers of the present technology have devised methods and computer devices for re-training Object Detecting Neural Networks (ODNN) so that they are able to localize objects on images in a more consistent manner - that is, the ODNN may be re-trained to determine, for similar images of a given object, similar locations of that given object on those similar images.

In some embodiments, a computer device as envisioned by the developers of the present technology may be able to generate a re-training dataset for the ODNN based on a digital feed of a sensor, such as a camera for example, that captures images of a surrounding area of a moving vehicle to which the sensor is affixed. In other words, while the vehicle is moving, the sensor may be capturing a digital feed, and based on this digital feed, the computer device as envisioned by the developers of the present technology may be able to generate a re-training dataset for the ODNN so that is able to localize objects on images in a more consistent manner.

In addition, the computer device as envisioned by the developers of the present technology may determine inconsistent-detection areas in the itinerary of the vehicle. For example, the computer device may be configured to mark and track geographic locations where localization of objects on images of the given geographic locations have been inconsistent.

Put another way, non-limiting examples of the present technology are directed to generating a re-training dataset that is focused on those samples where the ODNN has made an inconsistent prediction based on two images with substantially similar features (i.e. two images that are sequentially close to each other in time and space). In a sense, the non-limiting embodiments of the present technology enable to generate such a re-training set that focuses the ODNN on "weak learners" - i.e. areas where the ODNN tends to make mistakes in prediction.

It should be noted that in some embodiments of the present technology, a computer device may be configured to employ the ODNN for object detection purposes. It should also be noted that this computer device may use data output by the ODNN for controlling a vehicle. For example, the vehicle may be a semi-autonomous or a fully-autonomous vehicle that may be controlled by the computer device at least partially based on the data outputted by the ODNN

Furthermore, it is contemplated that the computer device may be configured to control such a vehicle based on, at least in part, the data outputted by the ODNN and without human intervention. The computer device may be configured to control the vehicle based on, at least in part, the data outputted by the ODNN and without requiring human analysis of the data outputted by the ODNN. The computer device may be configured to control the vehicle based on, at least in part, the data outputted by the ODNN and without requiring human decision making based on the data outputted by the ODNN. The computer device may be configured to control the vehicle based on, at least in part, the data outputted by the ODNN without requiring a human to control the vehicle. The computer device may be configured to control the vehicle based on, at least in part, predictions made by the ODNN without requiring human decision making based on these predictions for controlling the vehicle.

In a first broad aspect of the present technology, there is provided a method of generating training data for re-training an Object Detecting Neural Network (ODNN) as described in Claim 1. In some embodiments of the method, the computer device may be embodied as a processor. For example, the processor of an electronic device may be configured to execute the method. In another example, the processor of a server may be configured to execute the method.

In some embodiments of the method, the comparing the first portion of the first digital image with the second portion of the second digital image to determine the detection similarity value comprises applying an Intersection Over Union (IOU) analysis.

In some embodiments of the method, the applying the IOU analysis comprises: determining an intersection of between first portion and the second portion, and determining a union of the first portion with the second portion.

The method further comprises receiving, from a human-assessor, an indication of the actual portion occupied by the given object. The actual portion occupied by the given object is identified by the human-assessor based on an artificially-adjusted condition of the object.

The re-training the ODNN is performed to detect objects in accordance with artificially-adjusted conditions of objects.

The re-training the ODNN is performed based on the first digital image, the second digital image and the respective human-assessed labels.

In some embodiments of the method, the method further comprises inputting a third digital image into the ODNN. The third digital image is representative of the digital feed at a third moment in time. The ODNN is configured to detect a given object on the third digital image by determining a third portion of the third digital image that corresponds to a given object. The method further comprises inputting a fourth digital image into the ODNN. The fourth digital image is representative of the digital feed at a fourth moment in time after the third moment in time. The ODNN is configured to detect the given object on the fourth digital image by determining a fourth portion of the fourth digital image that corresponds to the given object. The method further comprises comparing the third portion of the third digital image with the fourth portion of the fourth digital image to determine a detection similarity value for the given object. The detection similarity value is indicative of how similar predictions executed by the ODNN at the third moment in time and the fourth moment in time in respect to detection of the given object are. The method further comprises in response to the detection similarity value being below the pre-determined threshold value, using at least one of the third digital image and the fourth digital image for obtaining a human-assessed label indicative of an actual portion of the at least one of the third digital image and the fourth digital image that is occupied by the given object in the respective one of the third digital image and the fourth digital image.

In some embodiments of the method, the at least one of the first digital image and the second digital image with the respective human-assessed label and the at least one of the third digital image and the fourth digital image with the respective human-assessed label form at least partially a re-training dataset of the ODNN

In some embodiments of the method, the re-training dataset of the ODNN is used to re-train the ODNN on features of digital images for which the ODNN makes inconsistent detection of objects.

In some embodiments of the method, the ODNN has been trained for object detection based on a training digital image and a human-assessed label about objects on the training digital image, and such that the ODNN predicts classes of objects and locations of objects on the training digital image.

In some embodiments of the method, a surrounding area of the moving vehicle during at least one of: the first moment in time, the second moment in time, the third moment in time and the forth moment in time, is determined to be an inconsistent-detection area.

In some embodiments of the method, the re-training of the ODNN is performed so that the ODNN is less likely to perform inconsistent object detection when the vehicle is in the inconsistent-detection area.

In some embodiments of the method, the re-training of the ODNN is performed so that the ODNN is less likely to perform inconsistent object detection based on features of digital images captured in the inconsistent-detection area.

In some embodiments of the method, the re-training of the ODNN is performed so that the ODNN is less likely to perform inconsistent object detection based on features of digital images captured in areas that are similar to the inconsistent-detection area.

In a second broad aspect of the present technology, there is provided a computer device as described in Claim 11.

In some embodiments of the computer device, to compare the first portion of the first digital image with the second portion of the second digital image to determine the detection similarity value comprises the computer device configured to apply an Intersection Over Union (IOU) analysis.

In some embodiments of the computer device, to apply the IOU analysis comprises the computer device configured to: determine the intersection of between first portion and the second portion, and determine a union of the first portion with the second portion.

The computer device is further configured to receive, from a human-assessor, an indication of the actual portion occupied by the given object. The actual portion occupied by the given object is identified by the human-assessor based on an artificially-adjusted condition of the object.

To re-train the ODNN is performed to detect objects in accordance with artificially-adjusted conditions of objects.

To re-train the ODNN is performed based on the first digital image, the second digital image and the respective human-assessed labels.

In some embodiments of the computer device, the computer device is further configured to input a third digital image into the ODNN. The third digital image is representative of the digital feed at a third moment in time. The ODNN is configured to detect a given object on the third digital image by determining a third portion of the third digital image that corresponds to a given object. The computer device is further configured to input a fourth digital image into the ODNN. The fourth digital image is representative of the digital feed at a fourth moment in time after the third moment in time. The ODNN is configured to detect the given object on the fourth digital image by determining a fourth portion of the fourth digital image that corresponds to the given object. The computer device is further configured to compare the third portion of the third digital image with the fourth portion of the fourth digital image to determine a detection similarity value for the given object. The detection similarity value is indicative of how similar predictions executed by the ODNN at the third moment in time and the fourth moment in time in respect to detection of the given object are. The computer device is further configured to, in response to the detection similarity value being below the pre-determined threshold value, use at least one of the third digital image and the fourth digital image for obtaining a human-assessed label indicative of an actual portion of the at least one of the third digital image and the fourth digital image that is occupied by the given object in the respective one of the third digital image and the fourth digital image.

In some embodiments of the computer device, the at least one of the first digital image and the second digital image with the respective human-assessed label and the at least one of the third digital image and the fourth digital image with the respective human-assessed label form at least partially a re-training dataset of the ODNN

In some embodiments of the computer device, the re-training dataset of the ODNN is used to re-train the ODNN on features of digital images for which the ODNN makes inconsistent detection of objects.

In some embodiments of the computer device, the ODNN has been trained for object detection based on a training digital image and a human-assessed label about objects on the training digital image, and such that the ODNN predicts classes of objects and locations of objects on the training digital image.

In some embodiments of the computer device, a surrounding area of the moving vehicle during at least one of: the first moment in time, the second moment in time, the third moment in time and the forth moment in time, is determined to be an inconsistent-detection area.

In some embodiments of the computer device, the re-training of the ODNN is performed so that the ODNN is less likely to perform inconsistent object detection when the vehicle is in the inconsistent-detection area.

In some embodiments of the computer device, the re-training of the ODNN is performed so that the ODNN is less likely to perform inconsistent object detection based on features of digital images captured in the inconsistent-detection area.

In some embodiments of the computer device, the re-training of the ODNN is performed so that the ODNN is less likely to perform inconsistent object detection based on features of digital images captured in areas that are similar to the inconsistent-detection area.

In the context of the present specification, a "server" is a computer program that is running on appropriate hardware and is capable of receiving requests (e.g. from client devices) over a network, and carrying out those requests, or causing those requests to be carried out. The hardware may be implemented as one physical computer or one physical computer system, but neither is required to be the case with respect to the present technology. In the present context, the use of the expression a "server" is not intended to mean that every task (e.g. received instructions or requests) or any particular task will have been received, carried out, or caused to be carried out, by the same server (i.e. the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "electronic device" is any computer hardware that is capable of running software appropriate to the relevant task at hand. In the context of the present specification, the term "electronic device" implies that a device can function as a server for other electronic devices and client devices, however it is not required to be the case with respect to the present technology. Thus, some (non-limiting) examples of electronic devices include personal computers (desktops, laptops, netbooks, etc.), smart phones, and tablets, as well as network equipment such as routers, switches, and gateways. It should be understood that in the present context the fact that the device functions as an electronic device does not mean that it cannot function as a server for other electronic devices. The use of the expression "an electronic device" does not preclude multiple client devices being used in receiving/sending, carrying out or causing to be carried out any task or request, or the consequences of any task or request, or steps of any method described herein.

In the context of the present specification, "client device" is any computer hardware that is capable of running software appropriate to the relevant task at hand. In the context of the present specification, in general the term "client device" is associated with a user of the client device. Thus, some (non-limiting) examples of client devices include personal computers (desktops, laptops, netbooks, etc.), smart phones, and tablets, as well as network equipment such as routers, switches, and gateways It should be noted that a device acting as a client device in the present context is not precluded from acting as a server to other client devices. The use of the expression "a client device" does not preclude multiple client devices being used in receiving/sending, carrying out or causing to be carried out any task or request, or the consequences of any task or request, or steps of any method described herein.

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, etc.

In the context of the present specification, the expression "software component" is meant to include software (appropriate to a particular hardware context) that is both necessary and sufficient to achieve the specific function(s) being referenced.

In the context of the present specification, the expression "computer information storage media" (also referred to as "storage media") is intended to include media of any nature and kind whatsoever, including without limitation RAM, ROM, disks (CD-ROMs, DVDs, floppy disks, hard drivers, etc.), USB keys, solid state-drives, tape drives, etc. A plurality of components may be combined to form the computer information storage media, including two or more media components of a same type and/or two or more media components of different types.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first database" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware components, in other cases they may be different software and/or hardware components.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

These and other features, aspects and advantages of the present technology will become better understood with regard to the following description, appended claims and accompanying drawings where:
Figure 1 depicts a schematic diagram of an example computer system for implementing certain embodiments of systems and/or methods of the present technology.
Figure 2 depicts a networked computing environment being suitable for use with some implementations of the present technology.
Figure 3 depicts a first digital image captured by a sensor of the networked computing environment of Figure 2, in accordance with the non-limiting embodiments of the present technology.
Figure 4 depicts the first digital image of Figure 3 and first in-use detection data outputted by an Object Detection Neural Network (ODNN) implemented in the networked computing environment of Figure 2, in accordance with the non-limiting embodiments of the present technology.
Figure 5 depicts a second digital image captured by the sensor of Figure 2, in accordance with the non-limiting embodiments of the present technology.
Figure 6 depicts the second digital image of Figure 5 and second in-use detection data outputted by the ODNN, in accordance with the non-limiting embodiments of the present technology.

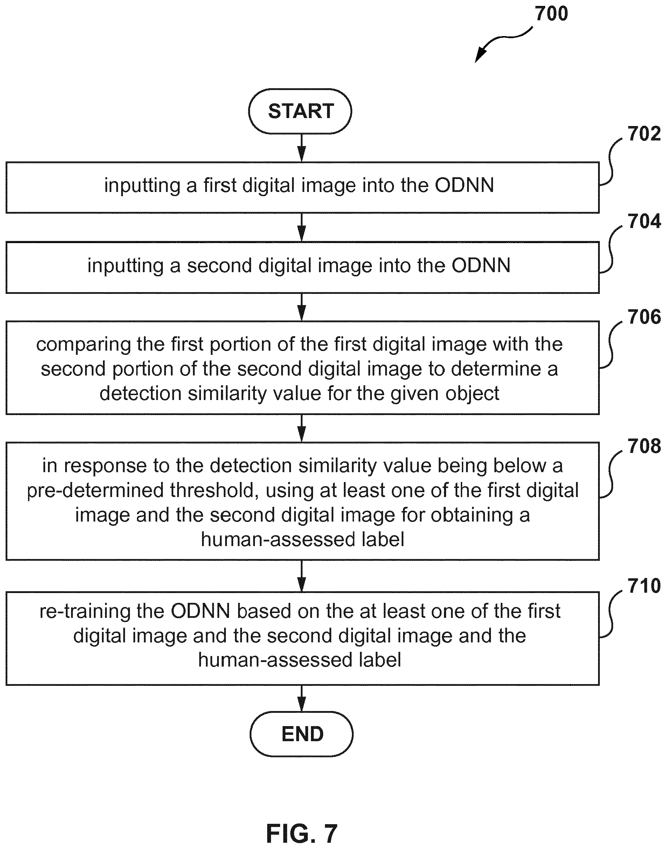

Figure 7 depicts a flow chart of a method, the method executable by a computer device, in accordance with the non-limiting embodiments of the present technology.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within the scope of the claims.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

### Computer system

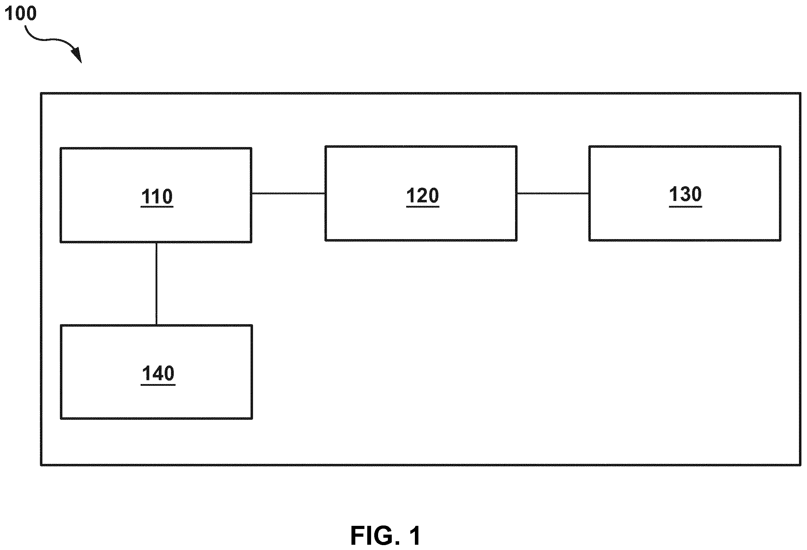

Referring initially to Figure 1, there is shown a computer system 100 suitable for use with some implementations of the present technology, the computer system 100 comprising various hardware components including one or more single or multi-core processors collectively represented by processor 110, a solid-state drive 120, a memory 130, which may be a random-access memory or any other type of memory.

Communication between the various components of the computer system 100 may be enabled by one or more internal and/or external buses (not shown) (e.g. a PCI bus, universal serial bus, IEEE 1394 "Firewire" bus, SCSI bus, Serial-ATA bus, etc.), to which the various hardware components are electronically coupled. According to embodiments of the present technology, the solid-state drive 120 stores program instructions suitable for being loaded into the memory 130 and executed by the processor 110 for determining a presence of an object. For example, the program instructions may be part of a vehicle control application executable by the processor 110. It is noted that the computer system 100 may have additional and/or optional components (not depicted), such as network communication modules, locationalization modules, and the like.

### Networked computer environment

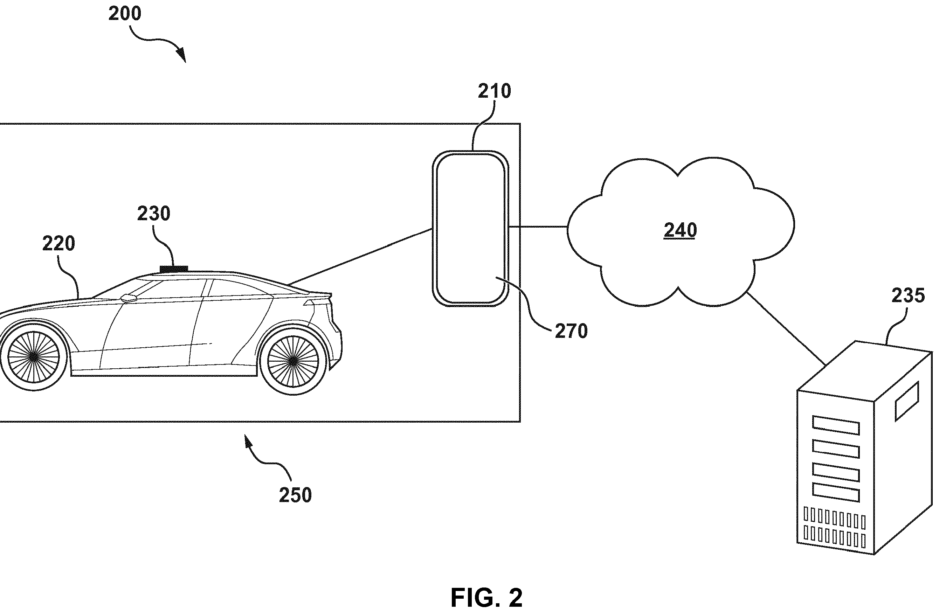

Figure 2 illustrates a networked computer environment 200 suitable for use with some embodiments of the systems and/or methods of the present technology. The networked computer environment 200 comprises an electronic device 210 associated with a vehicle 220, and/or associated with a user (not depicted) who can operate the vehicle 220, a server 235 in communication with the electronic device 210 via a communication network 245 (e.g. the Internet or the like, as will be described in greater detail herein below).

Optionally, the networked computer environment 200 can also include a GPS satellite (not depicted) transmitting and/or receiving a GPS signal to/from the electronic device 210. It will be understood that the present technology is not limited to GPS and may employ a positioning technology other than GPS. It should be noted that the GPS satellite can be omitted altogether.

The vehicle 220 to which the electronic device 210 is associated may comprise any leisure or transportation vehicle such as a private or commercial car, truck, motorbike or the like. Although the vehicle 220 is depicted as being a land vehicle, this may not be the case in each embodiment of the present technology. For example, the vehicle 220 may be a watercraft, such as a boat, or an aircraft, such as a flying drone.

The vehicle 220 may be user operated or a driver-less vehicle. It should be noted that specific parameters of the vehicle 220 are not limiting, these specific parameters including: vehicle manufacturer, vehicle model, vehicle year of manufacture, vehicle weight, vehicle dimensions, vehicle weight distribution, vehicle surface area, vehicle height, drive train type (e.g. 2x or 4x), tire type, brake system, fuel system, mileage, vehicle identification number, and engine size.

The implementation of the electronic device 210 is not particularly limited, but as an example, the electronic device 210 may be implemented as a vehicle engine control unit, a vehicle CPU, a vehicle navigation device (e.g. TomTom™, Garmin™), a tablet, a personal computer built into the vehicle 220 and the like. Thus, it should be noted that the electronic device 210 may or may not be permanently associated with the vehicle 220. Additionally or alternatively, the electronic device 210 can be implemented in a wireless communication device such as a mobile telephone (e.g. a smart-phone or a radio-phone). In certain embodiments, the electronic device 210 has a display 270.

The electronic device 210 may comprise some or all of the components of the computer system 100 depicted in Figure 1. In certain embodiments, the electronic device 210 is on-board computer device and comprises the processor 110, solid-state drive 120 and the memory 130. In other words, the electronic device 210 comprises hardware and/or software and/or firmware, or a combination thereof, for processing data as will be described in greater detail below.

### Sensor

In accordance to the non-limiting embodiments of the present technology, the electronic device 210 further comprises or has access to a sensor 230 configured to capture one or more digital images of at least a portion of a surrounding area 250 of the vehicle 220. The sensor 230 is communicatively coupled to the processor 110 for transmitting the so-captured information to the processor 110 for processing thereof, as will be described in greater detail herein below.

In a specific non-limiting example, the sensor 230 comprises a camera. How the camera is implemented is not particularly limited. For example, in one specific non-limiting embodiments of the present technology, the camera can be implemented as a mono camera with resolution sufficient to detect objects at a pre-determined distance of up to about 30 m (although cameras with other resolutions and ranges are within the scope of the present disclosure).

The sensor 230 can be mounted on an interior, upper portion of a windshield of the vehicle 220, but other locations are within the scope of the present disclosure, including on a back window, side windows, front hood, rooftop, front grill, or front bumper of the vehicle 220. In some non-limiting embodiments of the present technology, the sensor 230 can be mounted in a dedicated enclosure (not depicted) mounted on the top of the vehicle 220.

In some non-limiting embodiments of the present technology, the sensor 230 can be implemented as a plurality of cameras. For example, the plurality of cameras may have a sufficient number of cameras to capture a surrounding / panoramic digital image of the surrounding area 250.

In some embodiments of the present technology, the camera (or one or more cameras that make up the implementation of the sensor 230) may be configured to capture a pre-determined portion of the surrounding area 250 around the vehicle 220. In some embodiments of the present technology, the camera is configured to capture a digital image (or a series of digital images) that represent approximately 90 degrees of the surrounding area 250 around the vehicle 220 that are along a movement path of the vehicle 220.

In other embodiments of the present technology, the camera is configured to capture a digital image (or a series of digital images) that represent approximately 180 degrees of the surrounding area 250 around the vehicle 220 that are along a movement path of the vehicle 220.

In yet additional embodiments of the present technology, the camera is configured to capture a digital image (or a series of digital images) that represent approximately 360 degrees of the surrounding area 250 around the vehicle 220 that are along a movement path of the vehicle 220 (in other words, the entirety of the surrounding area around the vehicle 220).

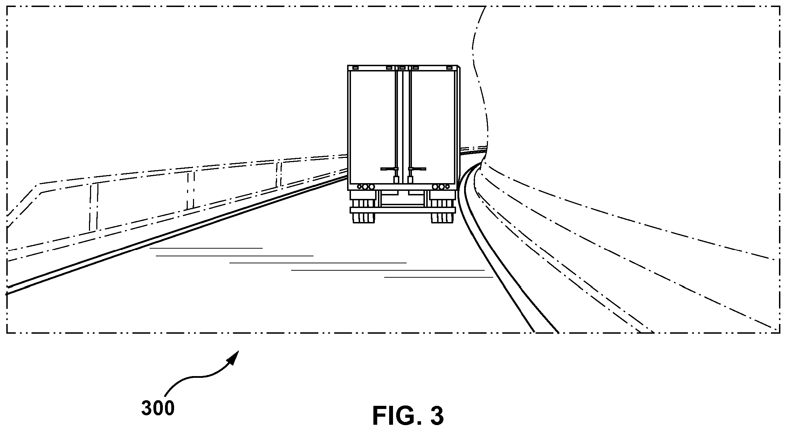

For example, with a quick reference to Figure 3, there is depicted a first digital image 300 captured by the sensor 230. The first digital image 300 represents a portion of the surrounding area 250 of the vehicle 220 at a first moment in time. As it can be seen on the first digital image 300, the vehicle 220 is travelling on a road and that another vehicle (e.g., a truck) is in the surrounding area 250 of the vehicle 220.

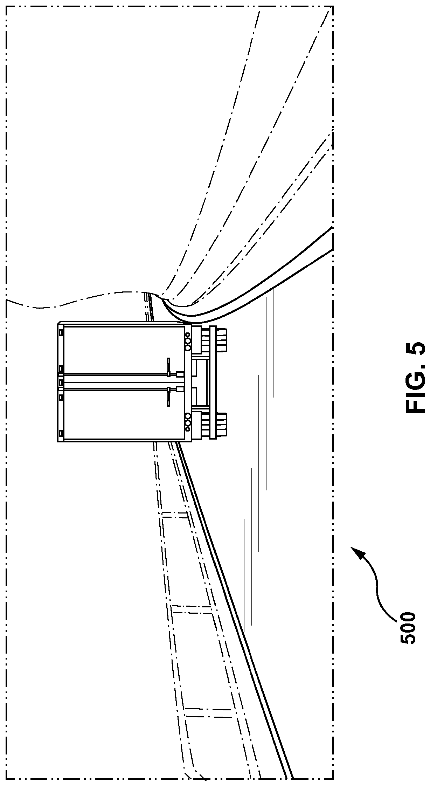

In another example, with a quick reference to Figure 5, there is depicted a second digital image 500 captured by the sensor 230. The second digital image 500 represents a portion of the surrounding area 250 of the vehicle 220 at a second moment in time that is after the first moment in time. As it can be seen on the second digital image 500, the vehicle 220 is still travelling on the road and the another vehicle is still in the surrounding area 250 of the vehicle 220.

It should be noted that the first digital image 300 and the second digital image 500 may be part of a digital feed captured by the sensor 230. In other words, the sensor 230 may be capturing a digital feed (in a form of a sequence of digital images, for example). As such, the first digital image 300 may be representative of the digital feed of the sensor 230 at the first moment in time, while the second digital image 500 may be representative of the digital feed of the sensor 230 at the second moment in time.

In a specific non-limiting example, the sensor 230 implemented as the camera may be of the type available from **FLIR Integrated Imaging Solutions Inc.,** 12051 Riverside Way, Richmond, BC, V6W 1K7, Canada. It should be expressly understood that the sensor 230 can be implemented in any other suitable equipment.

It should be noted that additional sensors to the sensor 230 may be implemented in some embodiments of the present technology. For example, radar systems may be mounted to the vehicle 220 and be communicatively coupled to the processor 110. In another example, LIDAR systems may be mounted to the vehicle 220 and be communicatively coupled to the processor 110. As such, the vehicle 220 is depicted in Figure 2 for the sake of simplicity as having only the sensor 230, however in other embodiments, the vehicle 220 may be implemented with additional sensors to the sensor 230 without departing from the scope of the present technology.

In some embodiments of the present technology, the sensor 230 can be calibrated. This calibration can be executed during the manufacturing and/or set up of the vehicle 220. Or at any suitable time thereafter or, in other words, the calibration can be executed during retrofitting the vehicle 220 with the sensor 230 in accordance with the non-limiting embodiments of the present technology contemplated herein. Alternatively, the calibration can be executed during equipping the vehicle 220 with the sensor 230 in accordance with the non-limiting embodiments of the present technology contemplated herein.

### Communication network

In some embodiments of the present technology, the communication network 245 is the Internet. In alternative non-limiting embodiments, the communication network can be implemented as any suitable local area network (LAN), wide area network (WAN), a private communication network or the like. It should be expressly understood that implementations for the communication network are for illustration purposes only. A communication link (not separately numbered) between the electronic device 210 and the communication network 245 is implemented will depend *inter alia* on how the electronic device 210 is implemented. Merely as an example and not as a limitation, in those embodiments of the present technology where the electronic device 210 is implemented as a wireless communication device such as a smartphone or a navigation device, the communication link can be implemented as a wireless communication link. Examples of wireless communication links include, but are not limited to, a 3G communication network link, a 4G communication network link, and the like. The communication network 245 may also use a wireless connection with the server 235.

### Server

In some embodiments of the present technology, the server 235 is implemented as a conventional computer server and may comprise some or all of the components of the computer system 100 of Figure 1. In one non-limiting example, the server 235 is implemented as a Dell™ PowerEdge™ Server running the Microsoft™ Windows Server™ operating system, but can also be implemented in any other suitable hardware, software, and/or firmware, or a combination thereof. In the depicted non-limiting embodiments of the present technology, the server is a single server. In alternative non-limiting embodiments of the present technology (not shown), the functionality of the server 235 may be distributed and may be implemented via multiple servers.

In some non-limiting embodiments of the present technology, the processor 110 of the electronic device 210 can be in communication with the server 235 to receive one or more updates. The updates can be, but are not limited to, software updates, map updates, routes updates, weather updates, and the like. In some embodiments of the present technology, the processor 110 can also be configured to transmit to the server 235 certain operational data, such as routes travelled, traffic data, performance data, and the like. Some or all data transmitted between the vehicle 220 and the server 235 may be encrypted and/or anonymized.

### Processor

The processor 110 is coupled to the sensor 230 for receiving image data therefrom. The processor 110 has access to a given Object Detecting Neural Network (ODNN). Broadly speaking, the given ODNN is a given Neural Network (NN) that is configured to perform object detection based on the image data being received from the sensor 230 (and potentially from other image data sources). This means that the processor 110 may be configured to receive image data representative of a given digital image from the sensor 230 and may employ the ODNN in order to (i) classify objects on the given digital image and (ii) localize the objects on the given digital image.

The ODNN may be configured to classify objects on the given digital image into one or more object classes. Object classes may include, but are not limited to: "vehicle", "car", "truck", "person", "animal", "tree", "building", "road", "lane", "road sign", "wall", "traffic light", and the like.

In one embodiment, the ODNN may be configured to perform "one-class" type classification of objects. This means that the ODNN may be configured to determine whether or not a given object is of a particular object class. For example, the ODNN may be configured to determine whether or not the given object is of a "vehicle" class.

In other embodiments, the ODNN may be configured to perform "multi-class" type classification of objects. This means that the ODNN may be configured to determine which one of a plurality of object classes is to be associated with a given object. For example, the ODNN may be configured to determine which of "vehicle" class, "person" class, and "lane" class is to be associated with the given object.

The ODNN may be configured to localize objects on the given digital image by determining a portion of the given digital image that corresponds to (or that is occupied by) the given object. For example, the ODNN may be configured to determine borders of the given object in the given digital image (and/or borders of an image portion of the given digital image that contains the given object). In another example, the ODNN may be configured to determine a zone which includes the given object in the given digital image.

How the ODNN may be configured to perform object detection - that is, classification and localization of objects on digital images - will now be described.

### Neural Network

As mentioned above, the ODNN is a given NN. Generally speaking, a given NN consists of a group of artificial interconnected "neurons", which process information using a connectionist approach to computation. NNs are used to model complex relationships between inputs and outputs (without actually knowing the relationships) or to find patterns in data. NNs are first conditioned in a training phase in which they are provided with a known set of "inputs" and information for adapting the NN to generate appropriate outputs (for a given situation that is being attempted to be modelled). During this training phase, the given NN adapts to the situation being learned and changes its structure such that the given NN will be able to provide reasonable predicted outputs for given inputs in a new situation (based on what was learned). Thus rather than try to determine a complex statistical arrangements or mathematical algorithms for a given situation; the given NN tries to provide an "intuitive" answer based on a "feeling" for a situation. The given NN is thus a kind of a trained "black box", which can be used in a situation when what is in the "box" is unimportant; it is only important that the "box" provide reasonable answers to given inputs.

NNs are commonly used in many such situations where it is only important to know an output based on a given input, but exactly how that output is derived is of lesser importance or is unimportant. For example, NNs are commonly used to optimize the distribution of web-traffic between servers and in data processing, including filtering, clustering, signal separation, compression, vector generation, speech recognition, and the like.

NNs can be classified into a number of different classes of NNs which may have different topologies or architectures, properties and may be used in a variety of applications. One class of NNs include Convolutional NNs (CNNs). CNNs are multilayered NNs that are designed to have an input layer and an output layer, as well as a plurality of hidden layers that can include (depending on a specific implementation thereof) convolutional layers, pooling layers, fully-connected layers, and normalization layers, for example. Through deep learning, CNNs can be used for analyzing visual imagery and other computer vision applications.

It is contemplated that, in some embodiments of the present technology, the ODNN employed by the processor 110 for object detection purposes may be a given CNN, without departing from the scope of the present technology.

To summarize, the implementation of the ODNN by the processor 110 can be broadly categorized into two phases - a training phase and an in-use phase.

First, the given ODNN is trained in the training phase. During the training phase, a large number of training iterations may be performed on the ODNN. Broadly speaking, during a given training iteration, the ODNN is inputted with (i) image data representative of a training digital image, and (ii) human-assessed data (e.g. a training human-assessed label) about objects on the training digital image (e.g., human-assessed object detection data). For example, the human-assessed data may comprise indications of object classes of objects identified by human-assessors as well as indications of locations of objects identified by human-assessors. Hence, the given ODNN in a sense "learns" to identify objects, their classes and their locations on the training digital image based on image data representative of the training digital image. It is contemplated that the ODNN may be implemented and trained by at least one of the server 235 and/or by the processor 110 of the electronic device 210.

Then, during the in-use phase, once the ODNN "knows" what data to expect as inputs (e.g., image data representative of digital images) and what data to provide as outputs (e.g., object detection data - that is, object classes and locations of objects on the digital images), the ODNN is actually run using in-use data. Broadly speaking, during in-use, the ODNN is inputted with image data representative of an in-use digital image and, in response, outputs in-use object detection data indicative of (i) presence of objects on the in-use digital image, (ii) object classes of these objects, and (iii) locations of these objects in the in-use digital image.

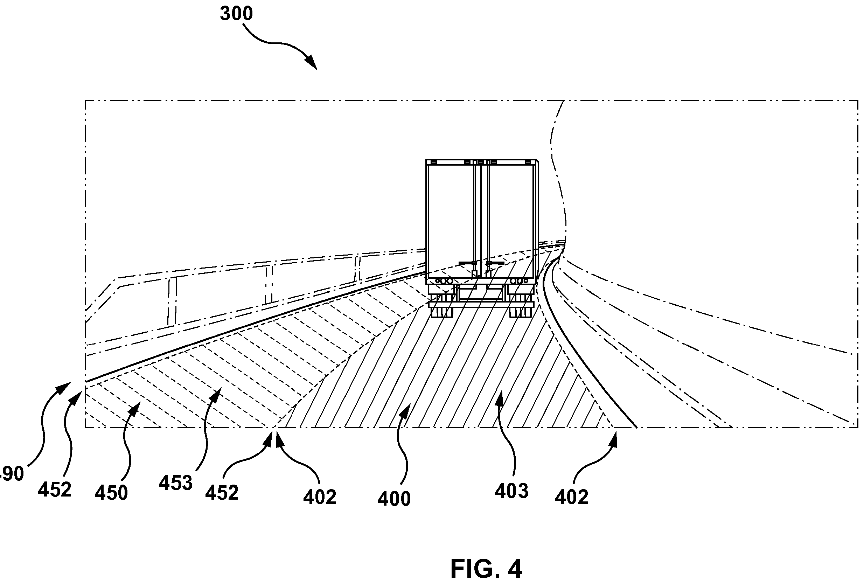

With reference to Figures 3 and 4, a first non-limiting example of the in-use phase of the given ODNN will now be described in greater detail. It should be recalled that the first digital image 300 is representative of the digital feed of the sensor 230 at the first moment in time. This means that the first digital image 300 may be a given digital image (associated with the first moment in time) in a sequence of digital images captured by the sensor 230 and transmitted to the processor 110 and/or to the server 235.

The processor 110 may be configured to input image data representative of the first digital image 300 into the ODNN. In other words, the processor 110 may use the image data representative of the first digital image 300 as in-use data for the ODNN. In response, the ODNN may output first in-use detection data 490 depicted in Figure 4. In this case, the first in-use detection data 490 is indicative of that the ODNN detected a first object 400 and a second object 450.

For example, the ODNN may output the first in-use detection data 490 indicative of that (i) the first object 400 is present on the first digital image 300, (ii) the first object 400 is associated with the "lane" object class, and (iii) the first object 400 is located in the first digital image 300 within first boundaries 402.

It can be said that the ODNN is configured to detect the first object 400 on the first digital image 300 by determining a first portion 403 (e.g., a set of pixels) of the first digital image 300 that corresponds to the first object 400. For example, the first portion 403 is a given portion of the first digital image 300 that is bounded by the first boundaries 402.

Also, the ODNN may output the first in-use detection data 490 indicative of that (i) the second object 450 is present on the first digital image 300, (ii) the second object 450 is associated with the "lane" object class, and (iii) the second object 450 is located in the first digital image 300 within second boundaries 452.

It can be said that the ODNN is configured to detect the second object 450 on the first digital image 300 by determining another portion 453 (e.g., another set of pixels) of the first digital image 300 that corresponds to the second object 450. For example, the another portion 453 is a given portion of the first digital image 300 that is bounded by the second boundaries 452.

In other words, it can be said that the ODNN detects the presence of two lanes on the road on which the vehicle 220 is travelling, where a most right lane of the road is the first object 400 and where a most left lane of the road is the second object 450. In some embodiments, the ODNN may also be configured to detect additional objects on the first digital image 300 such as, for example, an object corresponding to the another vehicle (e.g., the truck). However, for the sake of simplicity only, let it be assumed that the ODNN detects the first object 400 and the second object 450 on the first digital image 300.

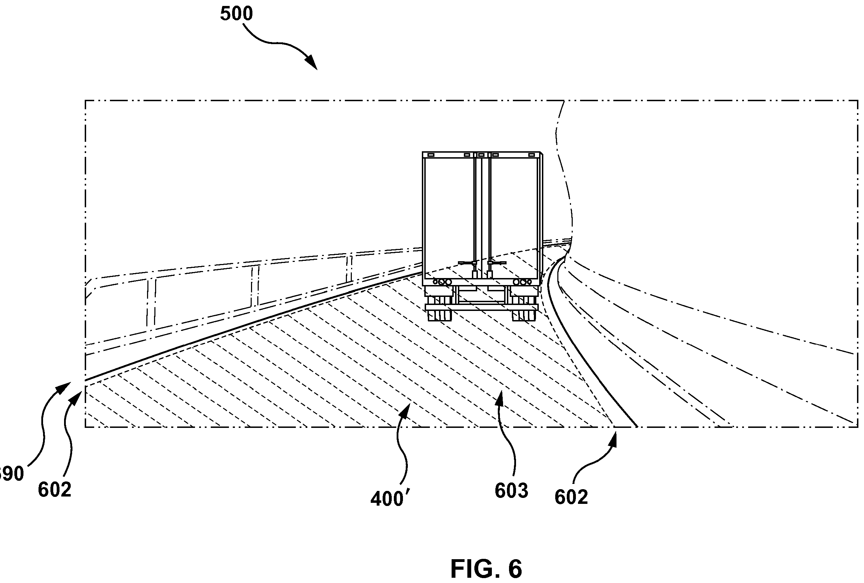

With reference to Figures 5 and 6, a second non-limiting example of the in-use phase of the ODNN will now be described in greater detail. It should be recalled that the second digital image 500 is representative of the digital feed of the sensor 230 at the second moment in time. The second digital image 500 may be a given digital image (associated with the second moment in time) in a sequence of digital images captured by the sensor 230 and transmitted to the processor 110 and/or the server 235.

In this case, the second moment in time is after the first moment in time associated with the first digital image 300. For example, the time interval between the first moment in time and the second moment in time may be in the order of milliseconds. In another example, the digital feed of the sensor 230 may be in a video format and where two frames of the digital feed correspond to respective ones of the first digital image 300 and the second digital image 500. In some embodiments, the first digital image 300 and the second digital image 500 may be sequential digital images from the digital feed of the sensor 230, but this does not need to be the case in each and every embodiment of the present technology.

The processor 110 and/or the server 235 may be configured to input image data representative of the second digital image 500 into the ODNN. In other words, the processor 110 and/or the server 235 may use the image data representative of the second digital image 500 as in-use data for the ODNN. In response, the ODNN may output second in-use detection data 690 depicted in Figure 6. In this case, the second in-use detection data 690 is indicative of that the ODNN detected an altered first object 400', instead of detecting both the first object 400 and the second object 450.

For example, the ODNN may output the second in-use detection data 690 indicative of that (i) the altered first object 400' is present on the second digital image 500, (ii) the altered first object 400' is associated with the "lane" object class, and (iii) the altered first object 400' is located in the second digital image 500 within third boundaries 502.

It can be said that the ODNN is configured to detect the altered first object 400' on the second digital image 500 by determining a second portion 503 (e.g., a set of pixels) of the second digital image 500 that corresponds to the altered first object 400'. For example, the second portion 503 is a given portion of the second digital image 500 that is bounded by the third boundaries 502.

In other words, it can be said that the ODNN detects based on the second digital image 500 the presence of one lane on the road, where this lane of the road is the altered first object 400', as opposed to detecting the presence of two lanes on the road based on the first digital image 300.

It should be noted that both the altered first object 400' and the first object 400 detected by the ODNN correspond to a same actual object (e.g., a particular lane), however, the altered first object 400' and the first object 400 have been localized differently by the ODNN as part of their detection - that is, the ODNN has determined different portions (e.g., locations) of the respective digital images that correspond to this same actual object.

It should be noted that, in these non-liming examples of the in-use phase of the ODNN, it is not important whether the road on which the vehicle 220 is travelling actually has one or two lanes. Irrespective of whether the road on which the vehicle 220 is travelling actually has one or two lanes, developers of the present technology realized that the ODNN detecting a given object on two digital images (having been captured in a short period of time from one another) as having substantially different portions (e.g., locations) on the respective digital images is problematic. This is based on the premised, as recognized by the developers of the present technology, that the ODNN has received substantially similar images, with substantially similar features; yet the ODNN has rendered substantially different predictions.

In other words, it is not important whether the detection performed by the ODNN on the first digital image 300 is more accurate than the detection performed by the ODNN on the second digital image 500, and *vice versa.* Irrespective of whether the detection performed by the ODNN on the first digital image 300 is more accurate than the detection performed by the ODNN on the second digital image 500, and *vice versa,* the developers of the present technology have realized that having substantially different detections performed by the ODNN on two digital images having been captured in a short period of time from one another is problematic.

Put another way, it is contemplated that the developers of the present technology have devised methods and systems for re-training the ODNN so that the ODNN detects objects in a more "consistent" manner, irrespective of the actual conditions of the surrounding area 250 of the vehicle 220 (see Figure 2).

For example, let it be assumed that the actual condition of the road on which the vehicle 220 is travelling is that it has one, single lane. Let it also be assumed that this single lane is a broad lane, such that it has a width that allows two vehicles to drive in it side-by-side (even if not *per se* allowed by law). It may also be desirable to train the ODNN to detect two lanes on the road, which is not the actual condition of the road but rather an "artificially-adjusted" condition of the road. Detecting artificially-adjusted conditions of the road (instead of the actual conditions thereof) may be desirable for mitigating risks resulting from overtaking manoeuvres on the road, for example. As such, detecting two lanes on the road (which is not the actual condition of the road but is rather the artificially-adjusted condition of the road) by the ODNN may allow the processor 110 to control the vehicle 220 differently and, in a sense, perform manoeuvers while "expecting" a potential overtake by a second vehicle even though the road has only one single lane.

Therefore, irrespective of whether it is desirable to detect one or two lanes on the road on which the vehicle 220 is traveling, it is desirable to detect lanes on this road in a consistent manner (by detecting artificial-adjusted conditions). To that end, the developers of the present technology have devised solutions for selecting digital images that are to be used for re-training the ODNN so that it detects objects in in-use digital images in a consistent manner.

Broadly speaking, the processor 110 and/or the server 235 may be configured to select at least one of the first digital image 300 and the second digital image 500, so as to be used for re-training the ODNN to perform more consistent object detection, by comparing (i) the first in-use detection data 490 associated with the first digital image 300 against (ii) the second in-use detection data 690 associated with the second digital image 500.

For example, the processor 110 and/or the server 235 may be configured to compare the first portion 403 of the first digital image 300 with the second portion 603 of the second digital image 500 to determine a detection similarity value for the first object 400 (and the altered first object 400'). The detection similarity value is indicative of how similar predictions by the ODNN are in respect to detection of the same actual object (a particular lane of the road) at the first moment in time and at the second moment.

In some embodiments, during the comparison, the processor 110 and/or the server 235 may be configured to perform an Intersection Over Union (IOU) analysis on the first portion 403 and the second portion 603. The IOU analysis (also known as the Jaccard Index and the Jaccard similarity coefficient) can gauge the similarity and diversity of sample sets. Broadly speaking, the IOU analysis results in a determination of a given IOU parameter indicative of a ratio between (i) an intersected area between the first portion 403 and the second portion 603 (Figure 6), and (ii) a united area between the first portion 403 (Figure 4) and the second portion 603.

For example, the closer the IOU parameter is to "1" the more similar the localization of the first object 400 is to the localization of the altered first object 400'. By the same token, the closer the IOU parameter is to "0" the less similar the localization of the first object 400 is to the localization of the altered first object 400'. In some embodiments, the detection similarity value determined by the processor 110 and/or the server 235 may be the IOU parameter for the first portion 403 and the second portion 603.

In some embodiments of the present technology, it is contemplated that the IOU analysis may be performed on projections of the first portion 403 and of the second portion 603 onto a two-dimensional surface, instead of performing the IOU analysis directly on the first portion 403 and the second portion 603. This means that in some embodiments of the present technology, the processor 110 may be configured to: (i) project the first portion 403 onto a two-dimensional surface, (ii) project the second portion 603 onto a two-dimensional surface, and (iii) perform the IOU analysis on these projections of the first portion 403 and of the second portion 603, instead of performing the IOU analysis directly on the first portion 403 and the second portion 603.

The processor 110 and/or the server 235 may be configured to compare this detection similarity value to a pre-determined threshold value. The pre-determined threshold value may be determined by an operator of the processor 110 and/or the server 235. For example, the operator of the processor 110 and/or the server 235 may empirically determine the pre-determined threshold value. In response to the detection similarity value being below the pre-determine threshold value, the processor 110 may be configured to use at least one of the first digital image 300 and the second digital image 500 for re-training the ODNN

Let it be assumed that the first digital image 300 is to be used. As such, the first digital image 300 may be provided to human-assessors tasked with identifying and locating objects of the first digital image 300. For example, they may be tasked with identifying human-assessed locations of objects on the first digital image 300 as well as their respective object classes (e.g., generating a human-assessed label for the first digital image 300). In other cases however, as explained above, they may be tasked to identify locations of objects in accordance with artificially-adjusted conditions of the road.

The processor 110 and/or the server 235 may perform re-training of the ODNN based on the selected at least one of the first digital image 300 and the second digital image 500 and the respective human-assessed data. For example, a second training-phase of the ODNN may be performed by the processor 110 and/or the server 235 based on the at least one of the first digital image 300 and the second digital image 500 and the respective human-assessed data so as to condition the ODNN to perform in-use object detection in a more consistent manner.

In some embodiments of the present technology, there is provided a method 700 of generating training data for re-training the ODNN and which is executable by a computer device such as, for example, the processor 110 and/or the server 235. The method 700 will now be described in greater detail.

### STEP 702: inputting a first digital image into the ODNN

The method 700 begins at step 702 with a computer device communicatively coupled with the ODNN (such as for example, the processor 110 and/or the server 235) inputting the first digital image 300 into the ODNN. The first digital image 300 is representative of the digital feed of the sensor 230 at the first moment in time.

The ODNN is configured to detect a given object (e.g., the first object 400 depicted in Figure 4) on the first digital image 300 by determining the first portion 403 of the first digital image 300 that corresponds to the given object.

For example, prior to the computer device employing the ODNN during the step 702, the ODNN may have been trained during its training phase. As alluded to above, it is contemplated that in some embodiments of the present technology, the ODNN may have been trained (prior to the step 702) for object detection based on (i) a training digital image and (ii) a human-assessed label about objects on the training digital image, and such that the ODNN predicts classes of objects and locations of objects on the training digital image.

### STEP 704: inputting a second digital image into the ODNN

The method 700 continues to step 704 with the computer device inputting the second digital image 500 into the ODNN. The second digital image 500 is representative of the digital feed of the sensor 230 at the second moment in time after the first moment in time.

The ODNN is configured to detect the given object (e.g., the altered first object 400') on the second digital image 500 by determining the second portion 603 of the second digital image 500 that corresponds to the given object.

It should be noted that both the altered first object 400' and the first object 400 detected by the ODNN correspond to a same actual object (e.g., a particular lane), however, the altered first object 400' and the first object 400 have been localized differently by the ODNN as part of their detection - that is, the ODNN determines different portions (e.g., locations) of the respective digital images that correspond to this same actual object.

### STEP 706: comparing the first portion of the first digital image with the second portion of the second digital image to determine a detection similarity value for the given object

The method 700 continues to step 706 with the computer device comparing the first portion 403 of the first digital image 300 with the second portion 603 of the second digital image 500 to determine the detection similarity value for the given object.

The detection similarity value is indicative of how similar predictions executed by the ODNN at the first moment in time and the second moment in time in respect to detection of the given object are. It can also be said that the detection similarity value is indicative of how similar the predictions of the ODNN regarding the locations of the given object on the respective digital images are to one another.

In some embodiments of the present technology, the comparing the first portion 403 of the first digital image 300 with the second portion 603 of the second digital image 500 to determine the detection similarity value may comprise applying by the computer device an Intersection Over Union (IOU) analysis. It is contemplated that applying the IOU analysis, as alluded to above, may comprise (i) determining the intersection of between first portion 403 and the second portion 603, and (ii) determining a union of the first portion 403 with the second portion 603.

### STEP 708: in response to the detection similarity value being below a pre-determined threshold, using at least one of the first digital image and the second digital image for obtaining a human-assessed label

The method 700 continues to step 708 with the computer device, in response to the detection similarity value being below the pre-determined threshold value, using at least one of the first digital image 300 and the second digital image 500 for obtaining the respective human-assessed label indicative of the actual portion of the at least one of the first digital image 300 and the second digital image 500 that is occupied by the given object in the respective one of the first digital image 300 and the second digital image 500.

The actual portion of the given object may be identified by a human-assessor based on the artificially-adjusted condition of the given object as explained above.

### STEP 710: re-training the ODNN based on the at least one of the first digital image and the second digital image and the human-assessed label

The method 700 continues to step 710 with the computer device re-training the ODNN based on the at least one of the first digital image 300 and the second digital image 500 and the respective human-assessed label(s).

For example, the first digital image 300 may be used with its respective human-assessed label in order to re-train the ODNN. In another example, the second digital image 500 may be used with its respective human-assessed label in order to re-train the ODNN. In a further example, both the first digital image 300 with its respective human-assessed label and the second digital image 500 with its respective human-assessed label may be used in order to re-train the ODNN

The human-assessor is tasked with identifying the actual portion of the given object in accordance with the artificially-adjusted condition of the given object, so that the ODNN may be re-trained so as to detect objects in accordance with artificially-adjusted conditions of objects.

In some embodiments of the present technology, the above steps of the method 700 may be repeated for a third digital image (not depicted) from the digital feed of the sensor 230 and for a fourth digital image (not depicted) from the digital feed of the sensor 230, similarly to how the computer device is configured to perform the above steps for the first digital image 300 and the second digital image 500, without departing from the scope of the present technology.

Hence, it is contemplated that the computer device may be configured to generate a re-training dataset for the ODNN. For example, the re-training dataset may comprise any combination of (i) the first digital image 300 with its respective human-assessed label, (ii) the second digital image 500 with its respective human-assessed label, (iii) the third digital image with its respective human-assessed label, and (iv) the fourth digital image with its respective human-assessed label.

In some embodiments of the present technology, the computer device may determined that the surrounding area 250 of the vehicle 220 at the first moment in time and/or at the second moment in time is an inconsistent-detection area. For example, the vehicle 220 may include a GPS-type sensor, for example, which may provide positioning data indicative of the location of the surrounding area 250 at a given moment in time. As a result, if the at least one of the first digital image 300 and the second digital image 500 is to be used for re-training the ODNN, the computer device may determine that the surrounding area 250 of the vehicle 220 at the moment in time when the at least one of the first digital image 300 and the second digital image 500 has been captured is an inconsistent-detection area. As such, in some embodiments, in addition to re-training the ODNN as explained above, the computer device may mark and track inconsistent-detection areas for further analysis.

It is contemplated that the re-training dataset generated for the ODNN may be used by the computer device (which may be the processor 110 of the electronic device 210, or the processor 110 of the server 235, for example) to re-train the ODNN on features of digital images for which the ODNN performs inconsistent detection of objects. As alluded to above, when the ODNN performs detection of a given object based on two digital images such as the first digital image 300 and the second digital image 500, for example, the ODNN performs detection of a given object based on similar inputs. However, as described above, although the inputs are similar (e.g., image data of the first digital image 300 and the second digital image 500), the outputs of the ODNN may be substantially different. As such, (i) generating the re-training dataset based on, in a sense, situations where similar inputs of the ODNN resulted in substantially different outputs of the ODNN, and (ii) using this re-training dataset to re-train the ODNN, may reduce a likelihood of the ODNN performing inconsistent detection of objects after its re-training phase. For example, the computer device may re-train the ODNN on features of the first digital image 300 and/or the second digital image 500 (the features derivable by the ODNN based on the respective image data), so that, after the re-training phase, the ODNN is less likely to perform an inconsistent detection of objects when receiving inputs similar to the image data of the first digital image 300 and/or the second digital image 500.

It should be noted that re-training the ODNN may be performed by the computer device so that the ODNN is less likely to perform inconsistent object detection when the vehicle 220 (or other potential vehicles implemented similarly to the vehicle 220) is in the inconsistent-detection area. After the re-training phase of the ODNN, when image data of digital images captured in the inconsistent-detection area is inputted into the ODNN, the ODNN may be less likely to repeat inconsistent object detection - that is, although the ODNN may perform inconsistent object detection based on image data of digital images captured in the inconsistent-detection area before the re-training phase, after the re-training phase, the ODNN is comparatively less likely to perform inconsistent object detection based on image data of digital images captured in the inconsistent-detection area. Hence, it can be said that the re-training of the ODNN, as described above, may be performed so that the ODNN is less likely to perform inconsistent object detection based on features of digital images captured in the inconsistent-detection area. Additionally, it is contemplated that re-training of the ODNN may be performed so that the ODNN is less likely to perform inconsistent object detection based on features of digital images captured in areas that are similar to the inconsistent-detection area. For example, digital images of areas that are similar to the inconsistent-detection area may be associated with features that are similar to features of digital images of the inconsistent-detection area.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A method (700) of generating training data for re-training an object detecting Neural Network (ODNN), the ODNN having been trained to detect lanes on a digital feed captured by a moving vehicle (220) by determining a portion of the digital image that corresponds to the lanes, the method (700) executable by a computer device, the method comprising:
• inputting (702) a first digital image (300) into the ODNN, the first digital image (300) being representative of the digital feed at a first moment in time,
the ODNN being configured to detect a given lane on the first digital image (300) by determining a first portion (403) of the first digital image (300) that corresponds to the given lane;
• inputting (704) a second digital image (500) into the ODNN, the second digital image (500) being representative of the digital feed at a second moment in time after the first moment in time,
the ODNN being configured to detect the given lane on the second digital image (500) by determining a second portion (503) of the second digital image (500) that corresponds to the given lane;
• comparing (706) the first portion (403) of the first digital image (300) with the second portion(503) of the second digital image (500) to determine a detection similarity value for the given lane, the detection similarity value being indicative of how similar predictions executed by the ODNN at the first moment in time and the second moment in time in respect to detection of the given lane are;
• in response to the detection similarity value being below a pre-determined threshold value,
receiving, from a human-assessor for at least one of the first digital image (300) and the second digital image (500), a human-assessed label indicative of an actual portion occupied by the given lane in the respective one of the first digital image (300) and the second digital image (500),
the actual portion having been identified by the human-assessor based on an artificially-adjusted condition of the road, the artificially-adjusted condition of the road is not an actual condition of the road, the actual condition being that the road has a single lane and the artificially-adjusted condition being that the road artificially has two lanes based on the single lane being broad enough to fit two vehicles side-by-side; and
• re-training (710) the ODNN with the human-assessed label and an associated one of at least one of the first digital image (300) and the second digital image (500), the re-training the ODNN being performed to detect lanes in accordance with artificially-adjusted conditions of roads.

2. The method of claim 1, wherein the comparing the first portion of the first digital image (300) with the second portion of the second digital image (500) to determine the detection similarity value comprises applying an Intersection Over Union (IOU) analysis.

3. The method of claim 2, wherein the applying the IOU analysis comprises: determining an intersection of the first portion (403) and the second portion (503), and determining a union of the first portion (403) with the second portion (503).

4. The method of any of claims 1-3, wherein the method further comprises:
• inputting a third digital image into the ODNN, the third digital image being representative of the digital feed at a third moment in time,
the ODNN being configured to detect a given lane on the third digital image by determining a third portion of the third digital image that corresponds to a given lane;
• inputting a fourth digital image into the ODNN, the fourth digital image being representative of the digital feed at a fourth moment in time after the third moment in time, the ODNN being configured to detect the given lane on the fourth digital image by determining a fourth portion of the fourth digital image that corresponds to the given lane;
• comparing the third portion of the third digital image with the fourth portion of the fourth digital image to determine a detection similarity value for the given lane, the detection similarity value being indicative of how similar predictions executed by the ODNN at the third moment in time and the fourth moment in time in respect to detection of the given lane are; and
• in response to the detection similarity value being below the pre-determined threshold value,
using at least one of the third digital image and the fourth digital image for obtaining a human-assessed label indicative of an actual portion of the at least one of the third digital image and the fourth digital image that is occupied by the given lane in the respective one of the third digital image and the fourth digital image.

5. The method of claim 4, wherein the at least one of the first digital image and the second digital image with the respective human-assessed label and the at least one of the third digital image and the fourth digital image with the respective human-assessed label form at least partially a re-training dataset of the ODNN.

6. The method of claim 5, wherein the re-training dataset of the ODNN is used to re-train the ODNN on features of digital images for which the ODNN makes inconsistent detection of lanes.

7. The method of claim 4, wherein the ODNN has been trained for lane detection based on a training digital image and a human-assessed label about lanes on the training digital image, and such that the ODNN predicts classes of lanes and locations of lanes on the training digital image.

8. The method of claim 7, wherein a surrounding area of the moving vehicle during at least one of: the first moment in time, the second moment in time, the third moment in time and the fourth moment in time, is determined to be an inconsistent-detection area.

9. The method of claim 8, wherein the re-training of the ODNN is performed so that the ODNN is less likely to perform inconsistent lane detection when the vehicle is in the inconsistent-detection area.

10. The method of claim 9, wherein the re-training of the ODNN is performed so that the ODNN is less likely to perform inconsistent lane detection based on features of digital images captured in the inconsistent-detection area, or
wherein the re-training of the ODNN is performed so that the ODNN is less likely to perform inconsistent lane detection based on features of digital images captured in areas that are similar to the inconsistent-detection area.

11. A computer device (110, 235) for generating training data for re-training an object detecting Neural Network (ODNN), the ODNN having been trained to detect lanes on a digital feed captured by a moving vehicle (220) by determining a portion of the digital image that corresponds to the lanes, the computer device being configured to:
• input a first digital image (300) into the ODNN, the first digital image (300) being representative of the digital feed at a first moment in time,
the ODNN being configured to detect a given lane on the first digital image (300) by determining a first portion (403) of the first digital image (300) that corresponds to the given lane;
• input a second digital image (500) into the ODNN, the second digital image (500) being representative of the digital feed at a second moment in time after the first moment in time,
the ODNN being configured to detect the given lane on the second digital image (500) by determining a second portion (503) of the second digital image (500) that corresponds to the given lane;
• compare the first portion (403) of the first digital image (300) with the second portion (503) of the second digital image (500) to determine a detection similarity value for the given lane, the detection similarity value being indicative of how similar predictions executed by the ODNN at the first moment in time and the second moment in time in respect to detection of the given lane are;
• in response to the detection similarity value being below a pre-determined threshold value,
use at least one of the first digital image (300) and the second digital image (500) for obtaining a human-assessed label indicative of an actual portion of the at least one of the first digital image (300) and the second digital image (500) that is occupied by the given lane in the respective one of the first digital image (300) and the second digital image (500);
receive, from a human-assessor for at least one of the first digital image (300) and the second digital image (500), a human-assessed label indicative of an actual portion occupied by the given lane in the respective one of the first digital image (300) and the second digital image (500),
the actual portion having been identified by the human-assessor based on an artificially-adjusted condition of the road, the artificially-adjusted condition of the road is not an actual condition of the road, the actual condition being a single lane and the artificially-adjusted condition being that the single lane artificially has two lanes based on the single lane being broad enough to fit two vehicles side-by-side; and
• re-train the ODNN with the human-assessed label and an associated one of the at least one of the first digital image (300) and the second digital image (500), the re-training the ODNN being performed to detect lanes in accordance with artificially-adjusted conditions of roads.

12. The computer device (110, 235) of claim 11, wherein to compare the first portion of the first digital image with the second portion of the second digital image to determine the detection similarity value comprises the computer device being configured to apply an Intersection Over Union (IOU) analysis, and optionally wherein to apply the IOU analysis comprises the computer device being configured to: determine the intersection of the first portion and the second portion, and determine a union of the first portion with the second portion.

## Patentansprüche

1. Verfahren (700) zum Erzeugen von Schulungsdaten zum Umschulen eines objektdetektierenden neuronalen Netzwerks (ODNN), wobei das ODNN so geschult wurde, dass es Fahrspuren auf einem digitalen Feed, das von einem sich bewegenden Fahrzeug (220) erfasst wird, durch Ermitteln eines Abschnitts des digitalen Bilds, der den Fahrspuren entspricht, erkennt, wobei das Verfahren (700) von einer Computervorrichtung ausgeführt werden kann, wobei das Verfahren Folgendes umfasst:
• Eingeben (702) eines ersten digitalen Bilds (300) in das ODNN, wobei das erste digitale Bild (300) den digitalen Feed zu einem ersten Zeitpunkt darstellt,
wobei das ODNN so konfiguriert ist, dass es eine bestimmte Fahrspur auf dem ersten digitalen Bild (300) durch Ermitteln eines ersten Abschnitts (403) des ersten digitalen Bilds (300), der der bestimmten Fahrspur entspricht, erkennt;
• Eingeben (704) eines zweiten digitalen Bilds (500) in das ODNN, wobei das zweite digitale Bild (500) den digitalen Feed zu einem zweiten Zeitpunkt nach dem ersten Zeitpunkt darstellt,
wobei das ODNN so konfiguriert ist, dass es die bestimmte Fahrspur auf dem zweiten digitalen Bild (500) durch Ermitteln eines zweiten Abschnitts (503) des zweiten digitalen Bilds (500), das der bestimmten Fahrspur entspricht, erkennt;
• Vergleichen (706) des ersten Abschnitts (403) des ersten digitalen Bilds (300) mit dem zweiten Abschnitt(503) des zweiten digitalen Bilds (500), um einen Erkennungsähnlichkeitswert für die bestimmte Fahrspur zu ermitteln, wobei der Erkennungsähnlichkeitswert angibt, wie ähnlich Voraussagen, die von dem ODNN zum ersten Zeitpunkt und zum zweiten Zeitpunkt gemacht werden, in Bezug auf das Erkennen der bestimmten Fahrspur sind;
• als Reaktion darauf, dass der Erkennungsähnlichkeitswert unter einem vorherbestimmten Schwellenwert ist,
Empfangen, von einem menschlichen Beurteiler für mindestens eines aus dem ersten digitalen Bild (300) und dem zweiten digitalen Bild (500), einer menschenbeurteilten Kennzeichnung, die einen tatsächlichen Abschnitt angibt, der von der bestimmten Fahrspur in dem jeweiligen einen aus dem ersten digitalen Bild (300) und dem zweiten digitalen Bild (500) eingenommen wird, angibt,
wobei der tatsächliche Abschnitt von dem menschlichen Beurteiler basierend auf einem künstlich angepassten Zustand der Straße identifiziert wurde, wobei der künstlich angepasste Zustand der Straße kein tatsächlicher Zustand der Straße ist, wobei der tatsächliche Zustand derjenige ist, dass die Straße eine einzige Fahrspur aufweist, und der künstlich angepasste Zustand derjenige ist, dass die Straße künstlich zwei Fahrspuren aufweist, basierend auf der Tatsache, dass die einzige Fahrspur breit genug ist, dass zwei Fahrzeuge nebeneinander Platz haben; und
• Umschulen (710) des ODNN mit der menschenbeurteilten Kennzeichnung und einem zugehörigen aus mindestens einem aus dem ersten digitalen Bild (300) und dem zweiten digitalen Bild (500), wobei das Umschulen des ODNN so durchgeführt wird, dass es Fahrspuren in Übereinstimmung mit künstlich angepassten Zuständen von Straßen erkennt.

2. Verfahren nach Anspruch 1, wobei das Vergleichen des ersten Abschnitts des ersten digitales Bilds (300) mit dem zweiten Abschnitt des zweiten digitalen Bilds (500), um den Erkennungsähnlichkeitswert zu ermitteln, das Anwenden einer Schnittmenge-über-Vereinigungsmenge(Intersection-Over-Union - IOU)-Analyse umfasst.

3. Verfahren nach Anspruch 2, wobei das Anwenden der IOU-Analyse Folgendes umfasst: Ermitteln einer Schnittmenge des ersten Abschnitts (403) und des zweiten Abschnitts (503), und Ermitteln einer Vereinigungsmenge des ersten Abschnitts (403) mit dem zweiten Abschnitt (503).

4. Verfahren nach einem der Ansprüche 1-3, wobei das Verfahren ferner Folgendes umfasst:
• Eingeben eines dritten digitalen Bilds in das ODNN, wobei das dritte digitale Bild den digitalen Feed zu einem dritten Zeitpunkt darstellt,
wobei das ODNN so konfiguriert ist, dass es eine bestimmte Fahrspur auf dem dritten digitalen Bild durch Ermitteln eines dritten Abschnitts des dritten digitalen Bilds, der einer bestimmten Fahrspur entspricht, erkennt;
• Eingeben eines vierten digitalen Bilds in das ODNN, wobei das vierte digitale Bild den digitalen Feed zu einem vierten Zeitpunkt nach dem dritten Zeitpunkt darstellt,
wobei das ODNN so konfiguriert ist, dass es die bestimmte Fahrspur auf dem vierten digitalen Bild durch Ermitteln eines vierten Abschnitts des vierten digitalen Bilds, der der bestimmten Fahrspur entspricht, erkennt;
• Vergleichen des dritten Abschnitts des dritten digitalen Bilds mit dem vierten Abschnitt des vierten digitalen Bilds, um einen Erkennungsähnlichkeitswert für die bestimmte Fahrspur zu ermitteln, wobei der Erkennungsähnlichkeitswert angibt, wie ähnlich Voraussagen, die von dem ODNN zu dem dritten Zeitpunkt und dem vierten Zeitpunkt gemacht werden, in Bezug auf das Erkennen der bestimmten Fahrspur sind; und
• als Reaktion darauf, dass der Erkennungsähnlichkeitswert unter dem vorherbestimmten Schwellenwert ist,
Verwenden mindestens eines aus dem dritten digitalen Bild und dem vierten digitalen Bild zum Erhalten einer menschenbeurteilten Kennzeichnung, die einen tatsächlichen Abschnitt des mindestens einen aus dem dritten digitalen Bild und dem vierten digitalen Bild angibt, der von der bestimmten Fahrspur in dem jeweiligen aus dem dritten digitalen Bild und dem vierten digitalen Bild eingenommen wird.

5. Verfahren nach Anspruch 4, wobei das mindestens eine aus dem ersten digitalen Bild und dem zweiten digitalen Bild mit der jeweiligen menschenbeurteilten Kennzeichnung und das mindestens eine aus dem dritten digitalen Bild und dem vierten digitalen Bild mit der jeweiligen menschenbeurteilten Kennzeichnung mindestens teilweise einen Umschulungsdatensatz des ODNN bilden.

6. Verfahren nach Anspruch 5, wobei der Umschulungsdatensatz des ODNN verwendet wird, um das ODNN zu Merkmalen von digitalen Bildern, für die das ODNN eine inkonsistente Erkennung von Fahrspuren durchführt, umzuschulen.

7. Verfahren nach Anspruch 4, wobei das ODNN zur Fahrspurerkennung basierend auf einem digitalen Schulungsbild und einer menschenbeurteilten Kennzeichnung zu Fahrspuren auf dem digitalen Schulungsbild geschult wurde, und derart, dass das ODNN Arten von Fahrspuren und Orte von Fahrspuren auf dem digitalen Schulungsbild vorhersagt.

8. Verfahren nach Anspruch 7, wobei ein Umgebungsbereich des sich bewegenden Fahrzeugs während mindestens eines aus: dem ersten Zeitpunkt, dem zweiten Zeitpunkt, dem dritten Zeitpunkt und dem vierten Zeitpunkt, als ein Bereich inkonsistenter Erkennung ermittelt wird.

9. Verfahren nach Anspruch 8, wobei die Umschulung des ODNN so durchgeführt wird, dass das ODNN weniger wahrscheinlich eine inkonsistente Fahrspurerkennung durchführt, wenn sich das Fahrzeug in dem Bereich inkonsistenter Erkennung befindet.

10. Verfahren nach Anspruch 9, wobei das Umschulen des ODNN so durchgeführt wird, dass das ODNN weniger wahrscheinlich eine inkonsistente Fahrspurerkennung basierend auf Merkmalen von digitalen Bildern, die in dem Bereich inkonsistenter Erkennung erfasst werden, macht, oder
wobei das Umschulen des ODNN so durchgeführt wird, dass das ODNN weniger wahrscheinlich eine inkonsistente Fahrspurerkennung basierend auf Merkmalen von digitalen Bildern, die in Bereichen, die dem Bereich inkonsistenter Erkennung ähnlich sind, erfasst werden, macht.

11. Computervorrichtung (110, 235) zum Erzeugen von Schulungsdaten zum Umschulen eines objektdetektierenden neuronalen Netzwerks (ODNN), wobei das ODNN so geschult wurde, dass es Fahrspuren auf einem digitalen Feed, das von einem sich bewegenden Fahrzeug (220) erfasst wird, durch Ermitteln eines Abschnitts des digitalen Bilds, der den Fahrspuren entspricht, erkennt, wobei die Computervorrichtung so konfiguriert ist, dass sie:
• ein erstes digitales Bild (300) in das ODNN eingibt, wobei das erste digitale Bild (300) den digitalen Feed zu einem ersten Zeitpunkt darstellt,
wobei das ODNN so konfiguriert ist, dass es eine bestimmte Fahrspur auf dem ersten digitalen Bild (300) durch Ermitteln eines ersten Abschnitts (403) des ersten digitalen Bilds (300), der der bestimmten Fahrspur entspricht, erkennt;
• ein zweites digitales Bild (500) in das ODNN eingibt, wobei das zweite digitale Bild (500) den digitalen Feed zu einem zweiten Zeitpunkt nach dem ersten Zeitpunkt darstellt,
wobei das ODNN so konfiguriert ist, dass es die bestimmte Fahrspur auf dem zweiten digitalen Bild (500) durch Ermitteln eines zweiten Abschnitts (503) des zweiten digitalen Bilds (500), das der bestimmten Fahrspur entspricht, erkennt;
• den ersten Abschnitt (403) des ersten digitalen Bilds (300) mit dem zweiten Abschnitt(503) des zweiten digitalen Bilds (500) vergleicht, um einen Erkennungsähnlichkeitswert für die bestimmte Fahrspur zu ermitteln, wobei der Erkennungsähnlichkeitswert angibt, wie ähnlich Voraussagen, die von dem ODNN zum ersten Zeitpunkt und zum zweiten Zeitpunkt gemacht werden, in Bezug auf das Erkennen der bestimmten Fahrspur sind;
• als Reaktion darauf, dass der Erkennungsähnlichkeitswert unter einem vorherbestimmten Schwellenwert ist,
mindestens eines aus dem ersten digitalen Bild (300) und dem zweiten digitalen Bild (500) verwendet, um eine menschenbeurteilte Kennzeichnung zu erhalten, die einen tatsächlichen Abschnitt des mindestens einen aus dem ersten digitalen Bild (300) und dem zweiten digitalen Bild (500) angibt, der von der bestimmten Fahrspur in dem jeweiligen einen aus dem ersten digitalen Bild (300) und dem zweiten digitalen Bild (500) eingenommen wird, angibt;
von einem menschlichen Beurteiler für mindestens eines aus dem ersten digitalen Bild (300) und dem zweiten digitalen Bild (500) eine menschenbeurteilte Kennzeichnung, die einen tatsächlichen Abschnitt angibt, der von der bestimmten Fahrspur in dem jeweiligen einen aus dem ersten digitalen Bild (300) und dem zweiten digitalen Bild (500) eingenommen wird, empfängt,
wobei der tatsächliche Abschnitt von dem menschlichen Beurteiler basierend auf einem künstlich angepassten Zustand der Straße identifiziert wurde, wobei der künstlich angepasste Zustand der Straße kein tatsächlicher Zustand der Straße ist, wobei der tatsächliche Zustand eine einzige Fahrspur ist und der künstlich angepasste Zustand derjenige ist, dass die einzige Fahrspur künstlich zwei Fahrspuren aufweist, basierend auf der Tatsache, dass die einzige Fahrspur breit genug ist, dass zwei Fahrzeuge nebeneinander Platz haben; und
• das ODNN mit der menschenbeurteilten Kennzeichnung und einem zugehörigen aus dem mindestens einen aus dem ersten digitalen Bild (300) und dem zweiten digitalen Bild (500) umschult, wobei das Umschulen des ODNN so durchgeführt wird, dass es Fahrspuren in Übereinstimmung mit künstlich angepassten Zuständen von Straßen erkennt.

12. Computervorrichtung (110, 235) nach Anspruch 11, wobei das Vergleichen des ersten Abschnitts des ersten digitalen Bilds mit dem zweiten Abschnitt des zweiten digitalen Bilds, um den Erkennungsähnlichkeitswert zu ermitteln, umfasst, dass die Computervorrichtung so konfiguriert ist, dass sie eine Schnittmenge-über-Vereinigungsmenge(Intersection-Over-Union - IOU)-Analyse anwendet, und optional wobei das Anwenden der IOU-Analyse umfasst, dass die Computervorrichtung so konfiguriert ist, dass sie: die Schnittmenge des ersten Abschnitts und des zweiten Abschnitts ermittelt und eine Vereinigungsmenge des ersten Abschnitts mit dem zweiten Abschnitt ermittelt.

## Revendications

1. Procédé (700) de génération de données d'entraînement pour réentraîner un réseau neuronal de détection d'objets (ODNN), l'ODNN ayant été entraîné pour détecter des voies sur des données numériques capturées par un véhicule en mouvement (220) en déterminant une partie de l'image numérique qui correspond aux voies, le procédé (700) pouvant être exécuté par un dispositif informatique, le procédé comprenant :
• l'entrée (702) d'une première image numérique (300) dans l'ODNN, la première image numérique (300) étant représentative des données numériques à un premier moment,
l'ODNN étant configuré pour détecter une voie donnée sur la première image numérique (300) en déterminant une première partie (403) de la première image numérique (300) qui correspond à la voie donnée ;
• l'entrée (704) d'une deuxième image numérique (500) dans l'ODNN, la deuxième image numérique (500) étant représentative des données numériques à un deuxième moment après le premier moment,
l'ODNN étant configuré pour détecter la voie donnée sur la deuxième image numérique (500) en déterminant une deuxième partie (503) de la deuxième image numérique (500) qui correspond à la voie donnée ;
• la comparaison (706) de la première partie (403) de la première image numérique (300) avec la deuxième partie (503) de la deuxième image numérique (500) pour déterminer une valeur de similarité de détection pour la voie donnée, la valeur de similarité de détection indiquant la similarité des prédictions exécutées par l'ODNN au premier moment et au deuxième moment par rapport à la détection de la voie donnée ;
• en réponse au fait que la valeur de similarité de détection est inférieure à une valeur de seuil prédéterminée,
la réception, à partir d'un évaluateur humain pour au moins l'une parmi la première image numérique (300) et la deuxième image numérique (500), d'une étiquette évaluée par l'homme indiquant une partie réelle occupée par la voie donnée dans l'image numérique respective parmi la première image numérique (300) et la deuxième image numérique (500),
la partie réelle ayant été identifiée par l'évaluateur humain sur la base d'un état ajusté artificiellement de la route, l'état ajusté artificiellement de la route n'est pas un état réel de la route, l'état réel étant que la route présente une voie unique et l'état ajusté artificiellement étant que la route présente artificiellement deux voies sur la base du fait que la voie unique est suffisamment large pour accueillir deux véhicules côte à côte ; et
• le réentraînement (710) de l'ODNN avec l'étiquette évaluée par l'homme et une image numérique associée d'au moins l'une parmi la première image numérique (300) et la deuxième image numérique (500), le réentraînement de l'ODNN étant effectué pour détecter des voies conformément aux états de routes ajustés artificiellement.

2. Procédé selon la revendication 1, dans lequel la comparaison de la première partie de la première image numérique (300) avec la deuxième partie de la deuxième image numérique (500) pour déterminer la valeur de similarité de détection comprend l'application d'une analyse d'intersection sur union (IOU).

3. Procédé selon la revendication 2, dans lequel l'application de l'analyse d'IOU comprend : la détermination d'une intersection de la première partie (403) et de la deuxième partie (503), et la détermination d'une union de la première partie (403) avec la deuxième partie (503).

4. Procédé selon l'une quelconque des revendications 1 à 3, le procédé comprenant en outre :
• l'entrée d'une troisième image numérique dans l'ODNN, la troisième image numérique étant représentative des données numériques à un troisième moment,
l'ODNN étant configuré pour détecter une voie donnée sur la troisième image numérique en déterminant une troisième partie de la troisième image numérique qui correspond à une voie donnée ;
• l'entrée d'une quatrième image numérique dans l'ODNN, la quatrième image numérique étant représentative des données numériques à un quatrième moment après le troisième moment,
• l'ODNN étant configuré pour détecter la voie donnée sur la quatrième image numérique en déterminant une quatrième partie de la quatrième image numérique qui correspond à la voie donnée ;
la comparaison de la troisième partie de la troisième image numérique avec la quatrième partie de la quatrième image numérique pour déterminer une valeur de similarité de détection pour la voie donnée, la valeur de similarité de détection indiquant la similarité des prédictions exécutées par l'ODNN au troisième moment et au quatrième moment par rapport à la détection de la voie donnée ; et
• en réponse au fait que la valeur de similarité de détection est inférieure à la valeur de seuil prédéterminée,
l'utilisation d'au moins l'une parmi la troisième image numérique et la quatrième image numérique pour obtenir une étiquette évaluée par l'homme indiquant une partie réelle de l'au moins une parmi la troisième image numérique et la quatrième image numérique qui est occupée par la voie donnée dans l'image numérique respective parmi la troisième image numérique et la quatrième image numérique.

5. Procédé selon la revendication 4, dans lequel l'au moins une parmi la première image numérique et la deuxième image numérique avec l'étiquette évaluée par l'homme respective et l'au moins une parmi la troisième image numérique et la quatrième image numérique avec l'étiquette évaluée par l'homme respective forment au moins partiellement un ensemble de données de réentraînement de l'ODNN.

6. Procédé selon la revendication 5, dans lequel l'ensemble de données de réentraînement de l'ODNN est utilisé pour réentraîner l'ODNN sur des caractéristiques d'images numériques pour lesquelles l'ODNN effectue une détection incohérente de voies.

7. Procédé selon la revendication 4, dans lequel l'ODNN a été entraîné pour la détection de voies sur la base d'une image numérique d'entraînement et d'une étiquette évaluée par l'homme concernant des voies sur l'image numérique d'entraînement, et de sorte que l'ODNN prédit des classes de voies et des emplacements de voies sur l'image numérique d'entraînement.

8. Procédé selon la revendication 7, dans lequel une zone environnante du véhicule en mouvement pendant au moins l'un parmi : le premier moment, le deuxième moment, le troisième moment et le quatrième moment, est déterminée comme étant une zone de détection incohérente.

9. Procédé selon la revendication 8, dans lequel le réentraînement de l'ODNN est effectué de sorte que l'ODNN est moins susceptible d'effectuer une détection de voie incohérente lorsque le véhicule se trouve dans la zone de détection incohérente.

10. Procédé selon la revendication 9, dans lequel le réentraînement de l'ODNN est effectué de sorte que l'ODNN est moins susceptible d'effectuer une détection de voie incohérente sur la base de caractéristiques d'images numériques capturées dans la zone de détection incohérente, ou
dans lequel le réentraînement de l'ODNN est effectué de sorte que l'ODNN est moins susceptible d'effectuer une détection de voie incohérente sur la base de caractéristiques d'images numériques capturées dans des zones qui sont identiques à la zone de détection incohérente.

11. Dispositif informatique (110, 235) pour générer des données d'entraînement pour réentraîner un réseau neuronal de détection d'objets (ODNN), l'ODNN ayant été entraîné pour détecter des voies sur des données numériques capturées par un véhicule en mouvement (220) en déterminant une partie de l'image numérique qui correspond aux voies, le dispositif informatique étant configuré pour :
• entrer une première image numérique (300) dans l'ODNN, la première image numérique (300) étant représentative des données numériques à un premier moment,
l'ODNN étant configuré pour détecter une voie donnée sur la première image numérique (300) en déterminant une première partie (403) de la première image numérique (300) qui correspond à la voie donnée ;
• entrer une deuxième image numérique (500) dans l'ODNN, la deuxième image numérique (500) étant représentative des données numériques à un deuxième moment après le premier moment,
l'ODNN étant configuré pour détecter la voie donnée sur la deuxième image numérique (500) en déterminant une deuxième partie (503) de la deuxième image numérique (500) qui correspond à la voie donnée ;
• comparer la première partie (403) de la première image numérique (300) avec la deuxième partie (503) de la deuxième image numérique (500) pour déterminer une valeur de similarité de détection pour la voie donnée, la valeur de similarité de détection indiquant la similarité des prédictions exécutées par l'ODNN au premier moment et au deuxième moment par rapport à la détection de la voie donnée ;
• en réponse au fait que la valeur de similarité de détection est inférieure à une valeur de seuil prédéterminée,
utiliser au moins l'une parmi la première image numérique (300) et la deuxième image numérique (500) pour obtenir une étiquette évaluée par l'homme indiquant une partie réelle de l'au moins une parmi la première image numérique (300) et la deuxième image numérique (500) qui est occupée par la voie donnée dans l'image numérique respective parmi la première image numérique (300) et la deuxième image numérique (500) ;
recevoir, à partir d'un évaluateur humain pour au moins l'une parmi la première image numérique (300) et la deuxième image numérique (500), une étiquette évaluée par l'homme indiquant une partie réelle occupée par la voie donnée dans l'image numérique respective parmi la première image numérique (300) et la deuxième image numérique (500),
la partie réelle ayant été identifiée par l'évaluateur humain sur la base d'un état ajusté artificiellement de la route, l'état ajusté artificiellement de la route n'est pas un état réel de la route, l'état réel étant une voie unique et l'état ajusté artificiellement étant que la voie unique présente artificiellement deux voies sur la base du fait que la voie unique est suffisamment large pour accueillir deux véhicules côte à côte ; et
• réentraîner l'ODNN avec l'étiquette évaluée par l'homme et une image numérique associée d'au moins l'une parmi la première image numérique (300) et la deuxième image numérique (500), le réentraînement de l'ODNN étant effectué pour détecter des voies conformément aux états de routes ajustés artificiellement.

12. Dispositif informatique (110, 235) selon la revendication 11, dans lequel la comparaison de la première partie de la première image numérique avec la deuxième partie de la deuxième image numérique pour déterminer la valeur de similarité de détection comprend le fait que le dispositif informatique est configuré pour appliquer une analyse d'intersection sur union (IOU), et éventuellement dans lequel l'application de l'analyse d'IOU comprend le fait que le dispositif informatique est configuré pour : déterminer l'intersection de la première partie et de la deuxième partie, et déterminer une union de la première partie avec la deuxième partie.
